# FASCICULE DE BREVET EUROPEEN

(11) **EP 2 501 708 B1**
(45) Date de publication et mention de la délivrance du brevet: **25.03.2015**
(21) Numéro de dépôt: 10782648.9
(22) Date de dépôt: 06.10.2010
(51) Int. Cl.: C07F 5/00

(54) **NOUVEAU SOLIDE HYBRIDE ORGANIQUE-INORGANIQUE IHM-2-N3 POURVU D'UNE FONCTION AZOTURE ET SON PROCEDE DE PREPARATION**
NEUER ORGANISCHER/ANORGANISCHER HYBRIDER IHM-2-N3-FESTSTOFF MIT EINER AZIDFUNKTION UND HERSTELLUNGSVERFAHREN DAFÜR
NOVEL ORGANIC/INORGANIC HYBRID SOLID IHM-2-N3 PROVIDED WITH AN AZIDE FUNCTION, AND METHOD FOR MANUFACTURING SAME

(30) Priorité: 23.10.2009 FR 0905102
(43) Date de publication de la demande: 26.09.2012
(73) Titulaire: IFP Energies nouvelles, 92852 Rueil-Malmaison Cedex (FR); CNRS, 75794 Paris Cedex 16 (FR); Université Claude Bernard de Lyon 1, 69622 Villeurbanne Cedex (FR); Bazer-Bachi, Delphine, 69230 St-Genis-Laval (FR); Bats, Nicolas, 69320 Feyzin (FR)
(72) Inventeur: SAVONNET, Marie, F-69001 Lyon (FR); FARRUSSENG, David, F-69380 Belmont d'Azegues (FR); PINEL, Catherine, F-69007 Lyon (FR); LECOCQ, Vincent, F-69530 Brignais (FR)
(86) Numéro de dépôt international: PCT/FR2010/000672
(87) Numéro de publication internationale: WO 2011/048283

(56) Documents cités:
- VOLKRINGER ET AL: "The Kagomé Topology of the Gallium and Indium Metal-Organic Framework Types with a ML-68 Structure: Synthesis, XRD, Solid-State NMR Characetrizations, and Hydrogen Adsorption", INORGANIC CHEMISTRY,, vol. 47, 1 janvier 2008 (2008-01-01), pages 11892-11901, XP002565402,
- WANG ET AL: "Accessing Postynthetic Modification in a Series of Metal-Organic Frameworks and the Influence of Framework Topology on Reactivity", INORG. CHEM,, vol. 48, 20 novembre 2008 (2008-11-20), pages 296-306, XP002565334,
- LEE ET AL: "Microporous Metal-Organic Frameworks with High Gas Sorption and Separation Capacity", ADV. FUNCT. MATER,, vol. 17, 1 janvier 2007 (2007-01-01), pages 1255-1262, XP002565335,

## Description

La présente invention se rapporte à un nouveau solide hybride cristallisé à matrice organique-inorganique, de structure tridimensionnelle, et à son procédé de préparation à partir du solide hybride cristallisé à matrice organique-inorganique IHM-2. Ledit nouveau solide, objet de la présente invention, porte une fonction azoture et est appelé dans la suite de la description IHM-2-N₃. Ledit solide IHM-2-N₃ présente une structure cristalline identique à celle du solide IHM-2 dont il est issu par une méthode de fonctionnalisation post-synthèse. Ledit solide IHM-2-N₃ est avantageusement utilisé dans des applications en tant que catalyseur ou adsorbant ou encore en tant qu'intermédiaire pour l'obtention de solides hybrides cristallisés à matrice organique-inorganique fonctionnalisés.

La modification de matériaux par fonctionnalisation est une étape souvent nécessaire pour l'élaboration de solides possédant les propriétés adéquates pour une application donnée. En effet, il peut être souhaitable d'améliorer les propriétés physico-chimiques d'un matériau, en modifiant sa surface par exemple, afin que les nouvelles propriétés obtenues après modifications soient plus appropriées pour des applications en séparation ou en catalyse. L'un des moyens couramment employé pour modifier la surface d'un matériau consiste à faire réagir les groupements fonctionnels initialement présents à sa surface par des entités possédant les fonctions souhaitées pour l'application envisagée. Les fonctions présentes à la surface d'un matériau peuvent être des groupements hydroxyles (-OH) ou tout autre groupement (amino -NH₂ ou -NH- par exemple) que l'on souhaite modifier afin d'orienter la réactivité chimique de la surface du matériau. Les réactifs employés posséderont les fonctionnalités nécessaires pour réagir avec les groupes présents initialement à la surface du matériau, et le résultat de la réaction sera un nouveau groupement chimique possédant la réactivité désirée. Un exemple d'une telle transformation consiste à faire réagir les groupements hydroxyles de la surface d'une silice par un silane portant une fonction amine (D. Brunel, Microporous and Mesoporous Materials, 1999, 27, 329-344). Ainsi, la fonction hydroxyle est transformée en fonction amine plus apte à catalyser des réactions basiques ou à capter du CO₂ par exemple. Cette méthodologie est applicable à tout matériau possédant initialement des fonctions réactives. Ces matériaux peuvent être des oxydes, des zéolithes ou encore des matériaux hybrides organiques/inorganiques, encore appelés polymères de coordination.

Ces polymères de coordination, dont les premiers ont été décrits dans les années 1960, font l'objet d'un nombre croissant de publications. En effet, l'effervescence autour de ces matériaux a permis d'atteindre une diversité structurale avancée en peu de temps (Férey G., l'actualité chimique, janvier 2007, n°304). Conceptuellement, les solides hybrides poreux à matrice mixte organique-inorganique sont assez semblables aux solides poreux à squelette inorganique. Comme ces derniers, ils associent des entités chimiques en donnant naissance à une porosité. La principale différence réside dans la nature de ces entités. Cette différence est particulièrement avantageuse et est à l'origine de toute la versatilité de cette catégorie de solides hybrides. En effet, la taille des pores devient, par l'utilisation de ligands organiques, ajustable par le biais de la longueur de la chaîne carbonée desdits ligands organiques. La charpente, qui dans le cas des matériaux poreux inorganiques, ne peut accepter que quelques éléments (Si, Al, Ge, Ga, éventuellement Zn) peut, dans ce cas, accueillir tous les cations à l'exception des alcalins. Pour la préparation de ces matériaux hybrides, aucun agent structurant spécifique n'est requis, le solvant joue cet effet à lui seul.
Il apparaît donc clairement que cette famille de matériaux hybrides permet une multiplicité de structures et par conséquent comprend des solides finement adaptés aux applications qui leur sont destinées.

Les polymères de coordination comprennent au moins deux éléments appelés connecteurs et ligands dont l'orientation et le nombre des sites de liaisons sont déterminants dans la structure du matériau hybride. De la diversité de ces ligands et connecteurs naît, comme on l'a déjà précisé, une immense variété de matériaux hybrides.
Par ligand, on désigne la partie organique du matériau hybride. Ces ligands sont, le plus souvent, des di- ou tri-carboxylates ou des dérivés de la pyridine. Quelques ligands organiques fréquemment rencontrés sont représentés ci-après : bdc = benzène-1,4-dicarboxylate, btc = benzène-1,3,5-tricarboxylate, ndc = naphtalène-2,6-dicarboxylate, bpy = 4,4'-bipyridine, hfipbb = 4,4'-(hexafluororisopropylidene)-bisbenzoate, cyclam = 1,4,8,11-tetraazacyclotetradecane.

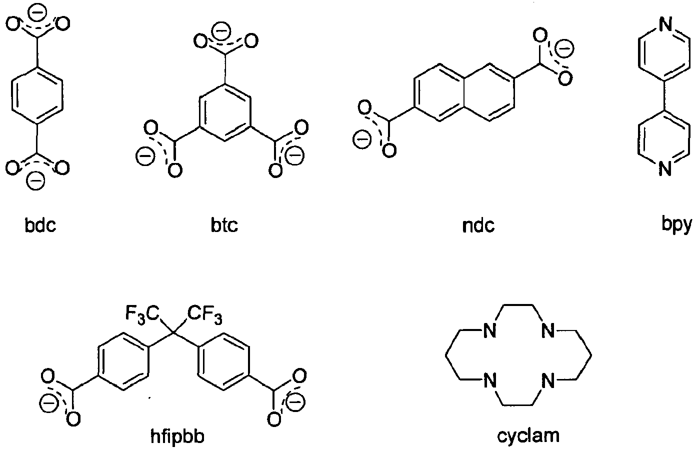

Par connecteur, on désigne l'entité inorganique du matériau hybride. Il peut s'agir d'un cation seul, d'un dimère, trimère ou tétramère ou encore d'une chaîne ou d'un plan.

Dans le cadre de la présente invention, le ligand utilisé pour la préparation du solide selon l'invention est l'acide 2-amino-téréphtalique (NH₂-H₂-bdc). L'entité inorganique jouant le rôle de connecteur est, quant à elle, l'indium.

Les équipes de Yaghi et Férey ont ainsi décrit un nombre important de nouveaux matériaux hybrides (série des MOF - " Metal Organic Framework " - et série des MIL - " Matériaux de l'Institut Lavoisier " - respectivement). De nombreuses autres équipes ont suivi cette voie et aujourd'hui le nombre de nouveaux matériaux hybrides décrits est en pleine expansion. Le plus souvent, les études visent à mettre au point des structures ordonnées, présentant des volumes poreux extrêmement importants, une bonne stabilité thermique et des fonctionnalités chimiques ajustables.
Par exemple, Yaghi *et al.* décrivent une série de structures à base de bore dans la demande de brevet US 2006/0154807 et indiquent leur intérêt dans le domaine du stockage des gaz. Le brevet US 7.202.385 divulgue un récapitulatif particulièrement complet des structures décrites dans la littérature et illustre parfaitement la multitude de matériaux existant déjà à ce jour.
La préparation de matériaux hybrides organiques-inorganiques présentant une fonction organique réactive (MOF greffé) peut être mise en oeuvre par deux voies principales : la fonctionnalisation par auto-assemblage et la fonctionnalisation par post-modification. La fonctionnalisation par auto-assemblage est réalisée par la mise en présence d'un ligand organique ayant la fonction réactive (greffon) désirée et d'un composé inorganique ayant le rôle de connecteur. Cette méthode de fonctionnalisation est souvent difficile à mettre en oeuvre en raison des problèmes liés à la solubilisation et à la réactivité des ligands fonctionnalisés. En particulier, les ligands portant une fonction -OH, -COOH ou -NH₂ risquent d'interagir avec le composé inorganique (connecteur) conduisant alors à des solides non-isostructuraux au MOF de référence non greffé. La fonctionnalisation par post-modification est une méthode alternative intéressante qui ne présente pas les limites de la fonctionnalisation par auto-assemblage. La fonctionnalisation par post-modification consiste à modifier directement la fonction organique d'au moins un type de ligand présent dans le MOF par une réaction chimique (greffage), plus précisément à substituer la fonction organique initiale par une fonction organique dont la réactivité est préférée pour une application ultérieure. Cette méthode suppose la présence sur le MOF initial d'une fonction organique accessible et réactive pour le greffage. Dans la littérature, les matériaux hybrides organiques-inorganiques portant un ligand avec une fonction amino -NH₂ tel que le DMOF-1-NH₂ (Z. Q. Wang ; K. K. Tanabe, S. M. Cohen, lnorganic Chemistry, 2009, 48, 296-306) sont décrits comme de bons supports pour le greffage de nombreuses fonctions, notamment les aldéhydes, les isocyanates et les anhydrides d'acide.

### Description de l'invention

La présente invention a pour objet un nouveau solide hybride cristallisé à matrice organique-inorganique présentant une structure tridimensionnelle. Ce nouveau solide est appelé IHM-2-N₃. Il contient un réseau inorganique de centres métalliques à base d'indium connectés entre eux par des ligands organiques constitués par l'entité -O₂C-C₆H₃-N₃-CO₂-. (ligand N₃-bdc)

Le solide hybride cristallisé IHM-2-N₃ selon l'invention présente un diagramme de diffraction des rayons X incluant au moins les raies inscrites dans le tableau 1. Ce diagramme de diffraction est obtenu par analyse radiocristallographique au moyen d'un diffractomètre en utilisant la méthode classique des poudres avec le rayonnement Kα1 du cuivre (λ=1,5406Å). A partir de la position des pics de diffraction représentée par l'angle 2θ, on calcule, en appliquant la relation de Bragg, les équidistances réticulaires dₕₖₗ caractéristiques de l'échantillon. L'erreur de mesure Δ(dₕₖₗ) sur dₕₖₗ est calculée grâce à la relation de Bragg en fonction de l'erreur absolue Δ(2θ) affectée à la mesure de 2θ. Une erreur absolue de Δ(2θ) égale à ±0,02° est communément admise. L'intensité relative I/I₀ affectée à chaque valeur de dₕₖₗ est mesurée d'après la hauteur du pic de diffraction correspondant. Le diagramme de diffraction des rayons X du solide hybride cristallisé IHM-2-N₃ selon l'invention comporte au moins les raies aux valeurs de dₕₖₗ données dans le tableau 1. Dans la colonne des dₕₖₗ, on a indiqué les valeurs moyennes des distances inter-réticulaires en Angströms (A). Chacune de ces valeurs doit être affectée de l'erreur de mesure Δ(dₕₖₗ) comprise entre ±0.3 A et ±0,01 A.

**Tableau 1 : Valeurs moyennes des dₕₖₗ et intensités relatives mesurées sur un diagramme de diffraction de rayons X du solide hybride cristallisé IHM-2-N₃.**

| 2 Thêta (°) | dₕₖₗ (Å) | I/I₀ | 2 Thêta (°) | dₕₖₗ (Å) | I/I₀ |
|---|---|---|---|---|---|
| 4,68 | 18,87 | mf | 25,04 | 3,55 | ff |
| 8,12 | 10,88 | ff | 26,45 | 3,37 | ff |
| 8,95 | 9,87 | ff | 26,68 | 3,34 | ff |
| 9,37 | 9,43 | FF | 27,41 | 3,25 | ff |
| 11,78 | 7,51 | ff | 28,33 | 3,15 | ff |
| 11,94 | 7,41 | f | 28,61 | 3,12 | ff |
| 12,43 | 7,11 | ff | 29,74 | 3,00 | ff |
| 14,08 | 6,28 | ff | 31,24 | 2,86 | ff |
| 14,74 | 6,00 | ff | 32,35 | 2,77 | ff |
| 16,34 | 5,42 | f | 34,20 | 2,62 | ff |
| 16,95 | 5,23 | ff | 35,47 | 2,53 | ff |
| 17,45 | 5,08 | ff | 38,06 | 2,36 | ff |
| 18,01 | 4,92 | ff | 41,71 | 2,16 | ff |
| 18,80 | 4,72 | mf | 42,02 | 2,15 | ff |
| 18,96 | 4,68 | f | 42,74 | 2,11 | ff |
| 21,03 | 4,22 | ff | 43,04 | 2,10 | ff |
| 23,53 | 3,78 | ff | 45,92 | 1,97 | ff |
| 23,82 | 3,73 | ff | 54,57 | 1,68 | ff |

où FF = très fort ; F = fort ; m = moyen ; mf = moyen faible ; f = faible ; ff = très faible. L'intensité relative I/I₀ est donnée en rapport à une échelle d'intensité relative où il est attribué une valeur de 100 à la raie la plus intense du diagramme de diffraction de rayons X : ff < 15 ; 15 ≤ f < 30 ; 30 ≤ mf < 50 ; 50 ≤ m <65 ; 65 ≤ F < 85 ; FF ≥ 85.

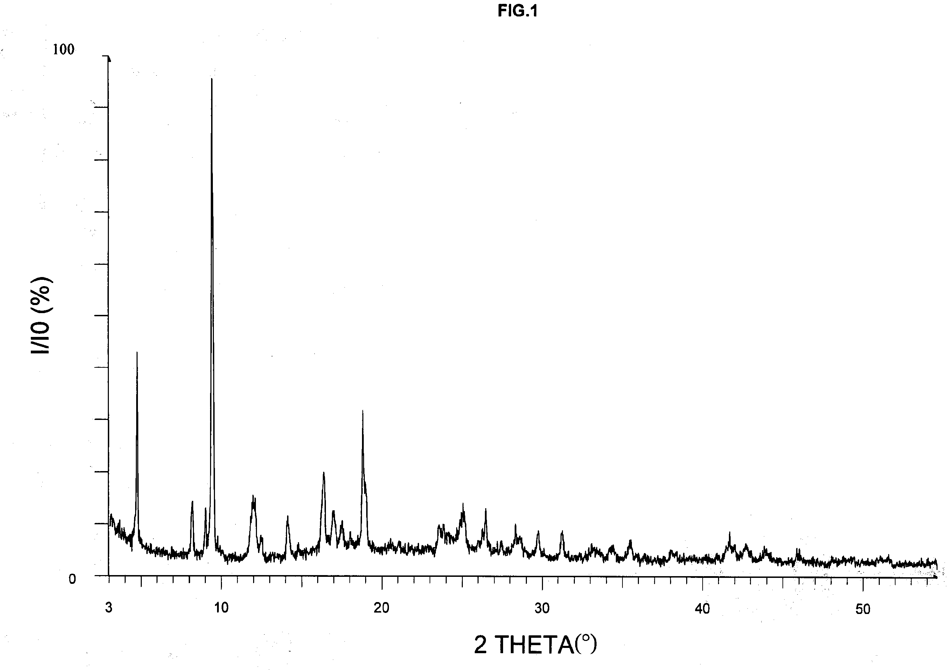

Le solide hybride cristallisé IHM-2-N₃ selon l'invention présente une structure cristalline de base ou topologie qui est caractérisée par son diagramme de diffraction X donné par la figure 1. La structure cristalline du solide hybride cristallisé IHM-2-N₃ selon l'invention est identique à celle présentée par le solide hybride cristallisé IHM-2 (décrit ci-après dans la présente description) et duquel ledit solide IHM-2-N₃ est issu, conformément au procédé de préparation décrit plus bas dans la présente description. Le solide hybride cristallisé IHM-2 présente ainsi une composition chimique ayant pour motif de base In(OH)(-O₂C-C₆H₃-NH₂-CO₂-). Ce motif est répété n fois, la valeur de n dépendant de la cristallinité dudit solide.

Le solide hybride cristallisé IHM-2-N₃ selon l'invention présente une structure tridimensionnelle dans laquelle le réseau inorganique formé de centres métalliques à base de cations In³⁺ jouant le rôle de connecteurs sont liés entre eux par des ligands téréphtaliques déprotonés (-O₂C-C₆H₃-N₃-CO₂-) portant une fonction azoture N₃ sur le cycle aromatique. Une caractéristique essentielle du solide hybride cristallisé IHM-2-N₃ selon l'invention réside dans la présence de la fonction azoture sur le cycle aromatique de chacun des ligands téréphtaliques déprotonés, plus précisément appelés ligands 2-azidotéréphtalate (noté N₃-bdc). La structure obtenue, identique à celle du solide IHM-2, est tridimensionnelle. Des chaînes inorganiques unidimensionnelles à motif -In-O(H)- sont liées entre elles par les ligands téréphtaliques déprotonés (-O₂C-C₆H₃-N₃-CO₂-). Chaque atome d'indium est hexacoordiné : chaque atome d'indium est entouré de deux atomes d'oxygène des groupements hydroxyles se situant en position apicale et de quatre atomes d'oxygène issus de quatre ligands téréphtaliques déprotonés (ligand N₃-bdc) se localisant en position équatoriale. De plus, chaque ligand organique -O₂C-C₆H₃-N₃-CO₂- est relié à deux atomes d'indium.
Le solide hybride cristallisé IHM-2-N₃ selon l'invention présente ainsi une composition chimique ayant pour motif de base In(OH)(-O₂C-C₆H₃-N₃-CO₂-). Ce motif est répété n fois, la valeur de n dépendant de la cristallinité dudit solide.
Le solide hybride cristallisé IHM-2-N₃ selon l'invention a également été caractérisé par Spectroscopie Infra Rouge à Transformée de Fourier (FT IR) et par ¹H RMN de manière à vérifier la présence de la fonction azoture sur chacun des ligands téréphtaliques déprotonés. Ainsi le spectre obtenu par FT IR présente une bande caractéristique de la fonction azoture à 2123 cm⁻¹. L'analyse ¹H RMN est réalisé sur un échantillon dudit solide hybride IHM-2-N₃ selon l'invention, après digestion et dissolution totale dudit échantillon dans un mélange deutéré DCl/D₂O/DMSO-*d*₆ selon un mode opératoire décrit dans la littérature (Z. Q. Wang, S. M. Cohen, Journal of the American Chemical Society, 2007, 129, 12368-12369). Couplée à l'analyse par FT IR, l'analyse ¹H RMN confirme la présence de la fonction azoture N₃ sur le cycle aromatique du ligand téréphtalique déprotoné : δ = 7,73-7,83 ppm, m, 3H, ArH. Les 3 protons conduisant à la détection du multiplet correspondent aux 3 protons portés par le cycle aromatique du ligand 2-azido-téréphtalate (N₃-bdc).

La présente invention a également pour objet un procédé de préparation du solide hybride cristallisé IHM-2-N₃. Ledit solide IHM-2-N₃ est préparé à partir du solide hybride cristallisé IHM-2 : ledit solide IHM-2 est un matériau hybride cristallisé à matrice organique-inorganique contenant un réseau inorganique de centres métalliques à base de l'élément indium connectés entre eux par des ligands organiques formés par l'entité 2-aminotéréphtalate O₂C-C₆H₃-NH₂-CO₂-. Il présente un diagramme de diffraction des rayons X incluant au moins les raies inscrites dans le tableau 2. Ce diagramme est obtenu selon une méthode identique à celle décrite plus haut dans la présente description pour le solide IHM-2-N₃.

**Tableau 2 : Valeurs moyennes des dₕₖₗ et intensités relatives mesurées sur un diagramme de diffraction de rayons X du solide hybride cristallisé IHM-2.**

| 2 Thêta (°) | dₕₖₗ (Å) | I/I₀ | 2 Thêta (°) | dₕₖₗ (Å) | I/I₀ |
|---|---|---|---|---|---|
| 4,70 | 18,80 | mf | 27,71 | 3,22 | ff |
| 8,12 | 10,88 | ff | 28,42 | 3,14 | ff |
| 9,37 | 9,43 | FF | 29,73 | 3,00 | f |
| 12,41 | 7,13 | ff | 30,14 | 2,96 | ff |
| 13,12 | 6,74 | ff | 31,23 | 2,86 | ff |
| 14,10 | 6,28 | ff | 32,96 | 2,72 | ff |
| 14,76 | 6,00 | ff | 33,47 | 2,68 | ff |
| 16,29 | 5,44 | f | 34,29 | 2,61 | ff |
| 16,95 | 5,23 | f | 35,42 | 2,53 | ff |
| 18,83 | 4,71 | mf | 37,99 | 2,37 | ff |
| 20,54 | 4,32 | ff | 41,75 | 2,16 | ff |
| 21,07 | 4,21 | ff | 42,73 | 2,11 | ff |
| 23,61 | 3,76 | ff | 43,98 | 2,06 | ff |
| 24,68 | 3,60 | ff | 49,18 | 1,85 | ff |
| 24,99 | 3,56 | f | 51,55 | 1,77 | ff |
| 26,01 | 3,42 | ff | 53,58 | 1,71 | ff |
| 26,44 | 3,37 | f | 54,45 | 1,68 | ff |

où FF = très fort ; F = fort ; m = moyen ; mf = moyen faible ; f = faible ; ff = très faible. L'intensité relative I/I₀ est donnée en rapport à une échelle d'intensité relative où il est attribué une valeur de 100 à la raie la plus intense du diagramme de diffraction de rayons X : ff < 15 ; 15 ≤ f < 30 ; 30 ≤ mf < 50 ; 50 ≤ m < 65 ; 65 ≤ F < 85 ; FF ≥ 85.

Ledit solide IHM-2 présente une structure tridimensionnelle dans laquelle les chaînes inorganiques unidimensionnelles à motif -In-O(H)- sont liées entre elles par les ligands 2-aminotéréphtalate (-O₂C-C₆H₃-NH₂-CO₂-, noté NH₂-BDC). Chaque atome d'indium est hexacoordiné : chaque atome d'indium est entouré de deux atomes d'oxygène des groupements hydroxyles se situant en position apicale et de quatre atomes d'oxygène issus de quatre ligands 2-aminotéréphtalate se localisant en position équatoriale. De plus, chaque ligand organique -O₂C-C₆H₃-NH₂-CO₂- (NH₂-BDC) est relié à deux atomes d'indium (un couple d'atomes voisins d'indium). Une méthode de préparation dudit solide IHM-2 est décrite dans l'exemple 1 de la présente demande de brevet. De manière plus générale, un procédé de préparation du solide IHM-2 comprend au moins les étapes suivantes :
a) la dissolution d'au moins un précurseur d'indium, préférentiellement le nitrate d'indium, dans au moins un solvant organique polaire, préférentiellement le diméthylformamide (DMF),
b) l'ajout d'acide 2-aminotéréphtalique (NH₂₋H₂-BDC) en solution dans au moins un solvant organique polaire, préférentiellement le diméthylformamide (DMF),
c) l'ajout d'une base, préférentiellement choisie parmi le 1,4-diazabicyclo[2.2.2] octane (DABCO), le 1,8-diazabicyclo[5.4.0]undec-7-ene (DBU), la triéthylamine, la pyridine, la soude et l'ammoniaque, en solution dans au moins un solvant organique polaire, dans le mélange obtenu à l'étape b),
d) la précipitation de l'acide 2-aminotéréphtalique et dudit précurseur d'indium avec ladite base à une température comprise entre 0 et 100°C, préférentiellement entre 10 et 60°C, pendant une durée comprise entre 1 et 8 heures,
e) la filtration et le lavage, et
f) le séchage du produit obtenu.

Le mélange réactionnel obtenu à l'issue de ladite étape c) présente avantageusement la composition molaire suivante : 1 précurseur d'indium : 1 acide 2-aminotéréphtalique : 2 base : 40 à 500 solvant(s) polaire(s) S. La formulation de cette composition molaire est exprimée en équivalent molaire.

Le procédé de préparation du solide IHM-2-N₃ de l'invention permet la substitution de la fonction amine -NH₂ présente dans le solide IHM-2 par la fonction azoture N₃. Le procédé de préparation selon l'invention comprend au moins les étapes suivantes :
i/ introduction, dans un solvant polaire S, d'au moins dudit solide hybride cristallisé IHM-2, d'au moins un composé organique Q contenant une fonction azoture N₃ et d'au moins un réactif intermédiaire R contenant une fonction nitrite NO₂ dans une proportion telle que le mélange réactionnel présente la composition molaire suivante, basée sur un équivalent molaire de la fonction -NH₂ présente dans le solide IHM-2 :
   1 IHM-2 : 1-100 R : 1-80 Q : 100-400 S
ii/ réaction dudit mélange réactionnel à une température comprise entre 0 et 100 °C pendant une durée comprise entre 1 et 24 heures pour obtenir ledit solide hybride cristallisé IHM-2-N₃
iii/ filtration puis lavage dudit solide hybride cristallisé IHM-2-N₃,
iv/ séchage dudit solide hybride cristallisé IHM-2-N₃.

Conformément à ladite étape i) dudit procédé de préparation du solide hybride cristallisé IHM-2-N₃ selon l'invention, ledit solide hybride cristallisé IHM-2 est préalablement séché avant d'être introduit dans ledit solvant polaire. Le séchage dudit solide hybride cristallisé IHM-2 est avantageusement réalisé à une température comprise entre 20 et 100 °C pendant une durée comprise entre 1 et 24 heures, très avantageusement pendant une durée d'environ 12 heures. Le séchage est effectué sous air ou sous vide, de manière préférée sous vide.

Conformément à ladite étape i) du procédé de préparation selon l'invention, ledit composé organique Q contenant une fonction azoture N₃ est avantageusement choisi parmi l'azoture de triméthylsilyle (TMS-N₃, (CH₃)₃SiN₃), l'azoture de triflyle (TfN₃. où Tf = CF₃SO₂), l'azoture de p-tosyle (TsN₃, ou 4-méthylbenzènesulfonylazide de formule C₆H₄(CH₃)SO₂N₃) et l'azoture de sodium (NaN₃). De manière préférée, ledit composé organique Q contenant une fonction N₃ est l'azoture de triméthylsilyle (TMS-N₃).
Conformément à ladite étape i) du procédé de préparation selon l'invention, ledit réactif intermédiaire R contenant une fonction nitrite NO₂ est avantageusement choisi parmi des réactifs alcalins comme le nitrite de sodium (NaNO₂) et le nitrite de calcium (Ca(NO₂)₂), des réactifs métalliques et des réactifs de type alcoyle tel que le tert-butyl-nitrite (tBuONO, (CH₃)₃CONO). De manière très préférée, ledit réactif intermédiaire R contenant une fonction nitrite NO₂ est le tert-butyl-nitrite (tBuONO). Ledit réactif intermédiaire R contenant une fonction nitrite NO₂ assure la formation d'un sel de diazonium qui réagit ensuite avec le composé organique Q.

Le solvant polaire S employé dans ladite étape i) du procédé de préparation selon l'invention, est préférentiellement volatil. Il est très avantageusement choisi parmi le tétrahydrofurane (THF) et l'acétonitrile.

Conformément à ladite étape i) du procédé de préparation selon l'invention, le mélange réactionnel présente préférentiellement la composition molaire suivante, basée sur un équivalent molaire de la fonction -NH₂ présente dans le solide IHM-2 :
1 IHM-2 : 25-50 R : 20-60 Q : 100-200 S

Ladite étape de réaction conformément à ladite étape ii) du procédé de préparation selon l'invention est préférentiellement réalisée à une température comprise entre 0 et 60°C, et de façon encore plus préférée à température ambiante. Le mélange réactionnel est agité à l'aide d'un agitateur magnétique. La durée de réaction est comprise entre 1 et 24 heures, préférentiellement entre 5 et 15 heures, le plus souvent environ 12 heures. Le solide obtenu à l'issue de ladite étape ii) est un solide hybride cristallisé IHM-2-N₃ présentant un diagramme de diffraction des rayons X incluant au moins les raies inscrites dans le tableau 1.

Conformément à ladite étape iii) du procédé de préparation selon l'invention, ledit solide hybride cristallisé IHM-2-N₃ obtenu à l'issue de ladite étape ii) est filtré puis lavé avec des solvants adaptés. Le lavage dudit solide IHM-2-N₃ est préférentiellement mis en oeuvre par une première séquence de lavages au moyen de solvants polaires, par exemple le THF, suivis d'une deuxième séquence de lavages au moyen de solvants volatils, par exemple le dichlorométhane. On procède, par exemple, à l'étape de lavage dudit solide hybride cristallisé IHM-2-N₃ en réalisant 3 séquences de lavage au THF suivies de 3 séquences de lavage au dichlorométhane CH₂Cl₂.
Conformément à ladite étape iv) du procédé de préparation selon l'invention, ledit solide hybride cristallisé IHM-2-N₃ est séché. Le séchage est réalisé sous air ou sous vide entre 20°C et 100°C, de préférence à température ambiante, pendant une durée variant entre 1 et 24 heures. De manière préférée, le séchage est réalisé à température ambiante sous vide pendant une durée variant entre 1 et 24 heures, le plus souvent environ 12 heures.

Le solide obtenu à l'issue de l'étape iv) est identifié comme étant le solide hybride cristallisé IHM-2-N₃ selon l'invention. Les analyses réalisées sur le solide obtenu à l'issue du procédé de préparation selon l'invention démontrent l'efficacité du traitement par post-modification. En particulier, l'analyse réalisée sur le solide hybride cristallisé IHM-2-N₃ par DRX démontre que le traitement de fonctionnalisation par post-modification permettant de substituer la fonction amino - NH₂ par la fonction azoture -N₃ n'affecte pas la structure et la cristallinité du solide. L'analyse par FT-IR révèle la présence de la fonction azoture -N₃ sur chacun des ligands téréphtalates dans le solide IHM-2-N₃. Couplée à l'analyse par FT IR, l'analyse ¹H RMN confirme la présence de la fonction azoture -N₃ sur chacun des ligands téréphtalates dans le solide IHM-2-N₃ et permet d'estimer le taux de modification des fonctions amino en fonctions azotures N₃. Conformément au procédé de préparation selon l'invention, ce taux de modification est très élevé, c'est-à-dire au moins égal à 95 %, de préférence au moins égal à 98%. Le taux de modification est calculé en quantifiant la décroissance de l'aire relative des signaux des protons aromatiques de la forme IHM-2 par rapport à ceux de la forme IHM-2-N₃. Le spectre ¹H RMN du solide IHM-2-N₃ selon l'invention présente de nouveaux signaux liés à l'apparition d'un multiplet intégrant pour 3 protons, lesquels correspondent aux 3 protons portés par le cycle aromatique du ligand 2-azido-téréphtalate (N₃-bdc).

### Exemples

Les solides hybrides cristallisés IHM-2 et IHM-2-N₃ obtenus à l'issue de la mise en oeuvre des protocoles de préparation illustrés par les exemples 1 et 2 suivants ont été analysés par diffraction des rayons X, par spectroscopie infrarouge à transformée de Fourrier (IRTF) et par résonance magnétique nucléaire de l'hydrogène (¹H RMN).

Les diagrammes de diffraction des rayons X sont obtenus par analyse radiocristallographique en utilisant la méthode classique des poudres au moyen d'un diffractomètre Bruker D5005 (CuKα₁₊₂= 0.15418 nm) équipé d'un monochromateur arrière courbe graphite et d'un détecteur à scintillation. Les analyses des solides ont été enregistrées en mode Debye-Scherrer de 3 à 80° (2θ) avec un pas de 0,02° pendant 8 secondes.
Les analyses infra rouge sont réalisées à l'aide de pastilles KBr sur un appareil FTIR Vector 22 Bruker avec une gamme de fonctionnement utile de : 4000-400 cm-¹.
Les spectres de Résonance Magnétique Nucléaire en solution sont obtenus à l'aide d'un Spectromètre de RMN Bruker Avance 250 (5,87T, 250MHz pour 1 H).

### Exemple 1 : Préparation du solide hybride cristallisé IHM-2

4.82 mL (3,3 mmol) d'une solution de nitrate d'indium (Alfa Aesar, 99,99%) dans le diméthylformamide (DMF, Aldrich, 99,8%) de concentration 0.68 mol/L sont placés dans un récipient en pyrex de 100 mL de volume intérieur, 10.06 mL (3,3 mmol) d'une solution d'acide 2-amino-1,4-benzène dicarboxylique (Alfa Aesar, 99%) dans du DMF de concentration 0,33 mol/L sont ajoutés. Le mélange est agité pendant 5 minutes à l'aide d'un agitateur magnétique. Après homogénéisation, 4.83 mL (6,7 mmol) d'une solution de 1,4-diazabicyclo[2.2.2] octane (DABCO, Aldrich, 98%) dans le DMF de concentration 1,38 mol/L sont ajoutés. La solution est agitée pendant 120 minutes à température ambiante. Après refroidissement et filtration, le solide cristallisé obtenu est lavé (24 heures) avec une solution à chaud (160°C) de DMF puis est imprégné avec du dichlorométhane (48 heures). Après séchage à l'air à une température égale à 120°C pendant une durée de 12 heures, on obtient un matériau sous forme de poudre constituée de cristaux de IHM-2.

Ledit solide hybride cristallisé IHM-2 est analysé par diffraction des rayons X, par spectroscopie infrarouge à transformée de Fourrier et par résonance magnétique nucléaire de l'hydrogène (¹H RMN).
L'analyse par diffraction des rayons X révèle que ledit solide obtenu à l'exemple 1 est identifié comme étant constitué de solide IHM-2 : il présente un diagramme de diffraction des rayons X incluant au moins les raies inscrites dans le tableau 2.
L'analyse par FT-IR révèle la présence de la fonction amino -NH₂ dans le solide IHM-2. IR (Pastille de KBr), υ (cm⁻¹): 3450, 3379, 2975 , 1660 , 1623, 1556 , 1423 , 1381 , 1256 , 1044 , 829, 790 , 770 , 699 , 579 , 522. Les bandes à 3450 et 3379 cm⁻¹ sont attribuées à la fonction amine.
L'analyse ¹H RMN est réalisée sur un échantillon du solide IHM-2, après digestion et dissolution totale de l'échantillon dans un mélange deutéré DCl/D₂O/DMSO-*d*₆ selon le mode opératoire décrit dans la littérature (Z. Q. Wang, S. M. Cohen, Journal of the American Society, 2007, 129, 12368-12369) : 10 mg de solide hybride IHM-2 sont digérés et dissous dans 1,5 mL de DMSO deutéré et 0,2 mL d'une solution diluée de DCI (préparée à partir d'une solution contenant 0,23mL de DCl/D₂O à 35% et 1mL de DMSO deutéré).
L'analyse ¹H NMR révèle également la présence du groupement amino - NH₂ dans le solide IHM-2. ¹H RMN, 250 MHz, t.a, δ (ppm / (DCl/D₂O/DMSO-*d₆*)) : 7,15 (d, 1H, J = 8,3Hz); 7,44 (s, 1H); 7,80 (d, 1H, J = 8,3Hz).

### Exemple 2 : Préparation du solide IHM-2-N₃ par post-modification du solide hybride IHM-2.

80 mg (0,26 mmol équivalent -NH₂) de solide IHM-2, obtenu à l'issue du procédé illustré dans l'exemple 1, sont séchés à 85°C sous vide puis sont placés dans un pilulier (capacité 8 mL) avec 3 mL (37 mmol, 142 équivalent molaire) de THF, 1,48 mL (12,48 mmol, 48 équivalent molaire) de tBuONO (Aldrich) et 1,3 mL (9,88 mmol, 38 équivalent molaire) de TMS-N₃ (Aldrich). Après 12 heures de réaction à température ambiante, le solide est filtré puis lavé trois fois avec 8 mL de THF (Carlo Erba) puis trois fois avec 8 mL de CH₂Cl₂ avant d'être séché sous vide à température ambiante pendant une nuit.
Le solide obtenu a été analysé par diffraction des rayons X et identifié comme étant constitué de solide hybride cristallisé IHM-2-N₃: le diffractogramme effectué sur le solide IHM-2-N₃ est celui donné par la figure 1. L'analyse réalisée sur le solide hybride cristallisé IHM-2-N₃ par DRX démontre que le traitement de post-modification permettant de substituer la fonction amino - NH₂ par la fonction azoture -N₃ n'affecte pas la structure et la cristallinité du solide. L'analyse par FT-IR révèle la présence du groupement azoture -N₃ sur chacun des ligands téréphtalates dans le solide IHM-2-N₃. Le spectre obtenu par FT IR présente une bande caractéristique de la fonction azoture à 2123 cm⁻¹. Les bandes à 3450 et 3379 cm⁻¹ correpondant à la fonction -NH₂ ont disparu.
L'analyse ¹H RMN est réalisée sur un échantillon du solide hybride IHM-2-N₃, après digestion et dissolution totale de l'échantillon dans un mélange deutéré DCl/D₂O/DMSO-*d*₆ selon un mode opératoire décrit dans la littérature (Z. Q. Wang, S. M. Cohen, Journal of the American Chemical Society, 2007, 129, 12368-12369) : 10 mg de solide hybride IHM-2-N₃ sont digérés et dissous dans 1,5 mL de DMSO deutéré et 0,2 mL d'une solution diluée de DCI (préparée à partir d'une solution contenant 0,23mL de DCl/D₂O à 35% et 1 mL de DMSO deutéré). L'analyse ¹H RMN confirme la présence de la fonction azoture N₃ sur le cycle aromatique du ligand téréphtalique déprotoné. ¹H RMN, 250 MHz, t.a, δ (ppm / (DCl/D₂O/DMSO-*d₆*)) : δ = 7,73-7,83 ppm, m, 3H, ArH. Les 3 protons conduisant à la détection du multiplet correspondent aux 3 protons portés par le cycle aromatique du ligand 2-azido-téréphtalate (N₃-bdc).
La comparaison des spectres IR et ¹H RMN obtenus pour le solide IHM-2 et pour le solide IHM-2-N₃ démontre l'efficacité dudit traitement de post-modification, la comparaison des spectres ¹H RMN obtenus pour le solide IHM-2 et pour le solide IHM-2-N₃ permettant d'estimer à 98% le taux de modification des fonctions amino en fonctions azotures N₃, en quantifiant la décroissance de l'aire relative des signaux du solide IHM-2 par rapport à ceux du solide IHM-2-N₃.

## Revendications

1. Solide hybride cristallisé à matrice organique-inorganique IHM-2-N₃, de structure tridimensionnelle, contenant un réseau inorganique de centres métalliques à base d'indium connectés entre eux par des ligands organiques constitués par l'entité -O₂C-C₆H₃-N₃-CO₂-(ligand N₃-bdc), ledit solide présentant un diagramme de diffraction des rayons X incluant au moins les raies inscrites dans le tableau ci-dessous :
| 2 Thêta (°) | dₕₖₗ (Å) | I/I₀ | 2 Thêta (°) | dₕₖₗ (Å) | I/I₀ |
|---|---|---|---|---|---|
| 4,68 | 18,87 | mf | 25,04 | 3,55 | ff |
| 8,12 | 10,88 | ff | 26,45 | 3,37 | ff |
| 8,95 | 9,87 | ff | 26,68 | 3,34 | ff |
| 9,37 | 9,43 | FF | 27,41 | 3,25 | ff |
| 11,78 | 7,51 | ff | 28,33 | 3,15 | ff |
| 11,94 | 7,41 | f | 28,61 | 3,12 | ff |
| 12,43 | 7,11 | ff | 29,74 | 3,00 | ff |
| 14,08 | 6,28 | ff | 31,24 | 2,86 | ff |
| 14,74 | 6,00 | ff | 32,35 | 2,77 | ff |
| 16,34 | 5,42 | f | 34,20 | 2,62 | ff |
| 16,95 | 5,23 | ff | 35,47 | 2,53 | ff |
| 17,45 | 5,08 | ff | 38,06 | 2,36 | ff |
| 18,01 | 4,92 | ff | 41,71 | 2,16 | ff |
| 18,80 | 4,72 | mf | 42,02 | 2,15 | ff |
| 18,96 | 4,68 | f | 42,74 | 2,11 | ff |
| 21,03 | 4,22 | ff | 43,04 | 2,10 | ff |
| 23,53 | 3,78 | ff | 45,92 | 1,97 | ff |
| 23,82 | 3,73 | ff | 54,57 | 1,68 | ff |
où FF = très fort ; F = fort ; m = moyen ; mf = moyen faible ; f = faible ; ff = très faible, l'intensité relative I/I₀ étant donnée en rapport à une échelle d'intensité relative où il est attribué une valeur de 100 à la raie la plus intense du diagramme de diffraction de rayons X : ff < 15 ; 15 ≤ f < 30 ; 30 ≤ mf < 50 ; 50 ≤ m < 65 ; 65 ≤ F < 85 ; FF ≥ 85.

2. Solide hybride cristallisé IHM-2-N₃ selon la revendication 1 tel qu'il présente une structure cristalline identique à celle du solide hybride cristallisé IHM-2 présentant une composition chimique ayant pour motif de base In(OH)(-O₂C-C₆H₃-NH₂-CO₂-).

3. Solide hybride cristallisé IHM-2-N₃ selon la revendication 1 ou la revendication 2 tel que chaque ligand organique -O₂C-C₆H₃-N₃-CO₂- est relié à deux atomes d'indium.

4. Solide hybride cristallisé IHM-2-N₃ selon l'une des revendications 1 à 3 tel que chaque atome d'indium est entouré de deux atomes d'oxygène des groupements hydroxyles se situant en position apicale et de quatre atomes d'oxygène issus de 4 ligands N₃-bdc se localisant en position équatoriale.

5. Solide hybride cristallisé IHM-2-N₃ selon l'une des revendications 1 à 4 tel qu'il présente une composition chimique ayant pour motif de base In(OH)(-O₂C-C₆H₃-N₃-CO₂-).

6. Procédé de préparation d'un solide hybride cristallisé IHM-2-N₃ à partir d'un solide hybride cristallisé IHM-2 comprenant au moins les étapes suivantes :
i/ introduction, dans un solvant polaire S, d'au moins dudit solide hybride cristallisé IHM-2, d'au moins un composé organique Q contenant une fonction azoture N₃ et d'au moins un réactif intermédiaire R contenant une fonction nitrite NO₂ dans une proportion telle que le mélange réactionnel présente la composition molaire suivante, basée sur un équivalent molaire de la fonction -NH₂ présente dans le solide IHM-2 :
1 IHM-2 : 1-100 R : 1-80 Q : 100-400 S
ii/ réaction dudit mélange réactionnel à une température comprise entre 0 et 100 °C pendant une durée comprise entre 1 et 24 heures pour obtenir ledit solide hybride cristallisé IHM-2-N₃,
iii/ filtration puis lavage dudit solide hybride cristallisé IHM-2-N₃
iv/ séchage dudit solide hybride cristallisé IHM-2-N₃.

7. Procédé de préparation selon la revendication 6 tel que ledit solide hybride cristallisé IHM-2 est préalablement séché avant d'être introduit dans ledit solvant polaire.

8. Procédé de préparation selon la revendication 6 ou la revendication 7 tel que ledit composé organique Q contenant une fonction azoture N₃ est choisi parmi l'azoture de triméthylsilyle (TMS-N₃), l'azoture de triflyle (TfN₃), l'azoture de p-tosyle (TsN₃) et l'azoture de sodium (NaN₃).

9. Procédé de préparation selon l'une des revendications 6 à 8 tel que ledit réactif intermédiaire R contenant une fonction nitrite NO₂ est le tert-butyl-nitrite (tBuONO).

10. Procédé de préparation selon l'une des revendications 6 à 9 tel que ledit solvant polaire S est choisi parmi le tétrahydrofurane (THF) et l'acétonitrile.

11. Procédé de préparation selon l'une des revendications 6 à 10 tel que ledit mélange réactionnel présente la composition molaire suivante :
1 IHM-2 : 25-50 R : 20-60 Q : 100-200 S

12. Procédé de préparation selon l'une des revendications 6 à 11 tel que ladite étape ii) est réalisée à température ambiante.

13. Procédé de préparation selon l'une des revendications 6 à 12 tel que la durée de ladite étape ii) est comprise entre 5 et 15 heures.

## Patentansprüche

1. Kristallisierter, hybrider IHM-2-N₃-Feststoff mit organisch-anorganischer Matrix mit dreidimensionaler Struktur, der ein anorganisches Netzwerk mit Metallzentren auf der Basis von Indium enthält, die miteinander durch organische Liganden verbunden sind, die aus der Spezies -O₂C-C₆H₃-N₃-CO₂- (N₃-bdc-Ligand) bestehen, wobei der Feststoff ein Röntgenbeugungsdiagramm aufweist, das mindestens die Peaks enthält, die in der nachfolgenden Tabelle eingetragen sind:
| 2 Thêta (°) | dₕₖₗ (Å) | I/I₀ | 2 Thêta (°) | dₕₖₗ (Å) | I/I₀ |
|---|---|---|---|---|---|
| 4,68 | 18,87 | mf | 25,04 | 3,55 | f |
| 8,12 | 10,88 | ff | 26,45 | 3.37 | ff |
| 8,95 | 9,87 | ff | 26,68 | 3,34 | ff |
| 9,37 | 9,43 | ff | 27,41 | 3,25 | ff |
| 11,78 | 7,51 | ff | 28,33 | 3,15 | ff |
| 11,94 | 7,41 | f | 28,61 | 3,12 | ff |
| 12,43 | 7,11 | ff | 29.74 | 3,00 | ff |
| 14,08 | 6,28 | ff | 31,24 | 2,86 | ff |
| 14,74 | 6,00 | ff | 32,35 | 2.77 | ff |
| 16,34 | 5,42 | f | 14,20 | 2,62 | ff |
| 6,95 | 5,23 | ff | 35,47 | 2,53 | ff |
| 7,45 | 5,08 | ff | 38,06 | 2,36 | ff |
| 18,01 | 4,92 | ff | 41,71 | 2,16 | ff |
| 80 | 4.72 | mf | 42,02 | 2.15 | ff |
| 18,96 | 4,68 | f | 42,74 | 2,11 | ff |
| 21,03 | 4,22 | ff | 43,04 | 2,10 | ff |
| 23,53 | 3,78 | ff | 45,92 | 1,97 | ff |
| 23,82 | 3,73 | ff | 54,57 | 1,68 | ff |
wobei FF = sehr stark; F = stark; m = mittel; mf = mittelschwach; f = schwach; ff = sehr schwach, wobei die relative Intensität I/I₀ bezogen auf eine relative Intensitätsskala angegeben wird, wobei dem intensivsten Peak des Röntgenbeugungsdiagramms ein Wert von 100 zugeschrieben wird:
ff< 15; 15 ≤ f < 30; 30 ≤ mf < 50; 50 ≤ m < 65; 65≤ F < 85; FF ≥ 85,

2. Kristallisierter hybrider IHM-2-N₃-Feststoff nach Anspruch 1, wobei er eine Kristallstruktur aufweist, die mit der des kristallisierten hybriden Feststoffs IHM-2 identisch ist, der eine chemische Zusammensetzung aufweist, die als Grundeinheit In(OH)(-O₂C-C₆H₃-NH₂-CO₂-) aufweist.

3. Kristallisierter hybrider IHM-2-N₃-Feststoff nach Anspruch 1 oder Anspruch 2, wobei jeder organische Ligand -O₂C-C₆H₃-N₃-CO₂- mit zwei Indiumatomen verbunden ist.

4. Kristallisierter hybrider IHM-2-N₃₋Feststoff nach einem der Ansprüche 1 bis 3, wobei jedes Indiumatom von zwei Sauerstoffatomen der Hydroxylgruppen umgeben ist, die sich an apikaler Position befinden, und von vier Sauerstoffatomen, die aus 4 N₃-bdc-Liganden stammen, die an äquatorialer Position liegen.

5. Kristallisierter hybrider IHM-2-N₃₋Feststoff nach einem der Ansprüche 1 bis 4, wobei er eine chemische Zusammensetzung aufweist, die als Grundeinheit In(OH)(-O₂C-C₆H₃-N₃-CO₂-) aufweist.

6. Verfahren zur Herstellung eines kristallisierten, hybriden IHM-2-N₃-Feststoffs aus einem kristallisierten, hybriden IHM-2-Feststoff, das mindestens die folgenden Schritte umfasst:
i/ Einführen, in ein polares Lösemittel S, mindestens des kristallisierten, hybriden Feststoffs IHM-2, mindestens einer organischen Verbindung Q, enthaltend eine Azidfunktion N₃ und mindestens eines Zwischenreagens R, enthaltend eine Nitritfunktion NO₂ in einem solchen Anteil, dass das Reaktionsgemisch die folgende Molzusammensetzung, basierend auf einem Moläquivalent der Funktion -NH₂, die in dem IHM-2-Feststoff vorhanden ist, aufweist:
1 IHM-2 : 1-100 R : 1-80 Q : 100-400 S
ii/ Umsetzen des Reaktionsgemischs bei einer Temperatur im Bereich zwischen 0 und 100 °C für eine Dauer im Bereich zwischen 1 und 24 Stunden, um den kristallisierten, hybridem IHM-2-N₃-Feststoff zu erhalten,
iii/ Filtern, dann Waschen des kristallisierten, hybriden IHM-2-N₃-Feststoffs,
iv/ Trocknen des kristallisierten, hybriden IHM-2-N₃-Feststoffs.

7. Verfahren zur Herstellung nach Anspruch 6, wobei der kristallisierte, hybride IHM-2-Feststoff vorher getrocknet wird, bevor er in das polare Lösemittel eingeführt wird.

8. Verfahren zur Herstellung nach Anspruch 6 oder Anspruch 7, wobei die organische Verbindung Q, die eine Azidfunktion N₃ enthält, aus Trimethylsilylazid (TMS-N₃), Triflylazid (TfN₃), p-Tosylazid (TsN₃) und Natriumazid (NaN₃) ausgewählt ist.

9. Verfahren zur Herstellung nach einem der Ansprüche 6 bis 8, wobei das Zwischenreagens R, das eine Nitritfunktion NO₂ enthält, tert-Butylnitrit (tBuONO) ist.

10. Verfahren zur Herstellung nach einem der Ansprüche 6 bis 9, wobei das polare Lösemittel S aus Tetrahydrofuran (THF) und Acetonitril ausgewählt ist.

11. Verfahren zur Herstellung nach einem der Ansprüche 6 bis 10, wobei das Reaktionsgemisch die folgende Molzusammensetzung aufweist:
1 IHM-2 : 25-50 R : 20-60 Q : 100-200 S

12. Verfahren zur Herstellung nach einem der Ansprüche 6 bis 11, wobei de Schritt ii) bei Umgebungstemperatur ausgeführt wird.

13. Verfahren zur Herstellung nach einem der Ansprüche 6 bis 12, wobei die Dauer von Schritt ii) im Bereich zwischen 5 und 15 Stunden liegt.

## Claims

1. IHM-2-N₃ crystallized hybrid solid with an organic-inorganic matrix, of a three-dimensional structure, containing an inorganic network of indium-based metal centers that are connected to one another by organic ligands that consist of the entity -O₂C-C₆H₃-N₃-CO₂- (N₃-bdc ligand), whereby said solid exhibits an X-ray diffraction diagram that includes at least the lines that are recorded in the table below:
| 2 Thêta (°) | dₕₖₗ (Å) | I/I₀ | 2 Thêta (°) | dₕₖₗ (Å) | I/I₀ |
|---|---|---|---|---|---|
| 4,68 | 18,87 | mf | 25,04 | 3,55 | ff |
| 8,12 | 10,88 | ff | 26,45 | 3,37 | ff |
| 8,95 | 9,87 | ff | 26,68 | 3,34 | ff |
| 9,37 | 9,43 | FF | 27,41 | 3,25 | ff |
| 11,78 | 7,51 | ff | 28,33 | 3,15 | ff |
| 11,94 | 7,41 | f | 28,61 | 3,12 | ff |
| 12,43 | 7,11 | ff | 29,74 | 3,00 | ff |
| 14,08 | 6,28 | ff | 31,24 | 2,86 | ff |
| 14,74 | 6,00 | ff | 32,35 | 2,77 | ff |
| 16,34 | 5,42 | f | 34,20 | 2,62 | ff |
| 16,95 | 5,23 | ff | 35,47 | 2,53 | ff |
| 17,45 | 5,08 | ff | 38,06 | 2,36 | ff |
| 18,01 | 4,92 | ff | 41,71 | 2,16 | ff |
| 18,80 | 4,72 | mf | 42,02 | 2,15 | ff |
| 18,96 | 4,68 | f | 42,74 | 2,11 | ff |
| 21,03 | 4,22 | ff | 43,04 | 2,10 | ff |
| 23,53 | 3,78 | ff | 45,92 | 1,97 | ff |
| 23,82 | 3,73 | ff | 54,57 | 1,68 | ff |
where FF = Very High; F = High; m = Medium; mf = Medium Low; f = Low; and ff = Very Low, with the relative intensity I/1, being provided in relation to a relative intensity scale where a value of 100 is assigned to the most intense line of the X-ray diffraction diagram: ff < 15; 15 f < 30; 30 5. mf < 50; 50 m < 65; 65 F < 85; and FF>85.

2. IHM-2-N₃ crystallized hybrid solid according to Claim 1, such that it exhibits a crystalline structure that is identical to the one of the IHM-2 crystallized hybrid solid that has a chemical composition that has In(OH)(-O₂C-C₆H₃-N₃-CO₂-) for its base pattern.

3. IHM-2-N₃ crystallized hybrid solid according to Claim 1 or Claim 2, such that each -O₂C-C₆H₃-N₃-CO₂- organic ligand is connected to two indium atoms.

4. IHM-2-N₃ crystallized hybrid solid according to one of Claims 1 to 3, such that each indium atom is surrounded by two oxygen atoms of hydroxyl groups that are located in apical position and four oxygen atoms that are obtained from 4 N₃-bdc ligands that are located in equatorial position.

5. IHM-2-N₃ crystallized hybrid solid according to one of Claims 1 to 4, such that it exhibits a chemical composition that has In(OH)(-O₂C-C₆H₃-N₃-CO₂-) for a base pattern.

6. Process for the preparation of an IHM-2-N₃ crystallized hybrid solid starting from an IHM-2 crystallized hybrid solid that comprises at least the following stages:
i/ Introduction, into a polar solvent S, of at least said IHM-2 crystallized hybrid solid, at least one organic compound Q that contains an N3 azide group, and at least one intermediate reagent R that contains an NO₂ nitrite group in a proportion such that the reaction mixture has the following molar composition, based on a molar equivalent of the -NH2 group that is present in the IHM-2 solid:
1 IHM-2 : 1-100 R : 1-80 Q : 100-400 S
ii/ Reaction of said reaction mixture at a temperature of between 0 and 100°C for a period of between 1 and 24 hours to obtain said IHM-2-N₃ crystallized hybrid solid,
iii/ Filtration, and then washing of said IHM-2-N₃ crystallized hybrid solid,
iv/ Drying of said IHM-2-N₃ crystallized hybrid solid.

7. Process for preparation according to Claim 6, such that said IHM-2 crystallized hybrid solid is dried in advance before being introduced into said polar solvent.

8. Process for preparation according to Claim 6 or Claim 7 such that said organic compound Q that contains an N₃ azide group is selected from among trimethylsilyl azide (TMS-N₃), triflyl azide (TfN₃), p-tosyl azide (TsN₃), and sodium azide (NaN₃).

9. Process for preparation according to one of Claims 6 to 8, such that said intermediate reagent R that contains an NO₂ nitrite group is tert-butyl-nitrite (tBuONO).

10. Process for preparation according to one of Claims 6 to 9, such that said polar solvent S is selected from among tetrahydrofuran (THF) and acetonitrile.

11. Process for preparation according to one of Claims 6 to 10, such that said reaction mixture has the following molar composition:
1 IHM-2 : 25-50 R : 20-60 Q : 100-200 S

12. Process for preparation according to one of Claims 6 to 11, such that said stage ii) is implemented at ambient temperature.

13. Process for preparation according to one of Claims 6 to 12, such that the period of said stage ii) is between 5 and 15 hours.
